# EUROPÄISCHE PATENTSCHRIFT

(11) **EP 0 685 384 B1**
(45) Veröffentlichungstag und Bekanntmachung des Hinweises auf die Patenterteilung: **16.09.1998**
(21) Anmeldenummer: 95250124.5
(22) Anmeldetag: 24.05.1995
(51) Int. Cl.: B62J 6/20, B60B 7/00

(54) **Rad**
Wheel
Roue

(30) Priorität: 26.05.1994 DE 9408686 U
(43) Veröffentlichungstag der Anmeldung: 06.12.1995
(73) Patentinhaber: Lehmann, Günter, D-01987 Schwarzheide (DE); Lehmann, Gerhard, D-01987 Schwarzheide (DE)
(72) Erfinder: Lehmann, Günter, D-01987 Schwarzheide (DE); Lehmann, Gerhard, D-01987 Schwarzheide (DE)
(74) Vertreter: Schneider, Henry

(56) Entgegenhaltungen:
- DE-A- 3 047 435
- FR-A- 2 060 520
- FR-A- 2 301 430
- US-A- 3 317 246
- US-A- 3 602 550
- US-A- 5 349 470

## Beschreibung

Die Erfindung betrifft ein Rad nach dem Oberbegriff des Anspruchs 1.

Räder der gattungsgemäßen Art sind bekannt. Diese weisen eine Felge und eine Nabe sowie die Felge mit der Nabe verbindende Versteifungsmittel auf. Diese Versteifungsmittel können sowohl die Felge mit der Nabe verbindende Speichen als auch durch eine starr mit der Felge und der Nabe verbundene Scheibe, zur Ausbildung eines sogenannten Scheibenrades, sein. Die Räder können sowohl als Laufräder sowie als angetriebene Räder ausgebildet sein und beispielsweise bei allen Fahrzeugen, zum Beispiel Fahrrädern, Motorrädern, Autos usw. eingesetzt werden.

Insbesondere bei Rädern für Fahrräder ist das Anbringen von quer zur Fahrtrichtung wirkenden Reflektoren aus Sicherheitsgründen angebracht. Besitzen die Räder beispielsweise Speichen, können die Reflektoren über den Umfang des Rades auf den Speichen befestigt werden. Hierbei ist jedoch nachteilig, daß diese Reflektoren unmittelbar allen äußeren Einflüssen während des bestimmungsgemäßen Gebrauchs des Fahrrades ausgesetzt sind, so daß diese oft beschädigt werden beziehungsweise gänzlich verloren gehen. Bei den sogenannten Scheibenrädern können die Reflektoren zwar an den Scheiben befestigt, beispielsweise aufgeklebt werden, wobei jedoch der Einsatz der Scheibenräder aufgrund ihrer großen Seitenwindanfälligkeit nicht in jedem Falle möglich beziehungsweise wünschenswert ist.

Aus der FR-A-2 301 430 ist ein Rad bekannt, bei dem auf einer an Speichen befestigbaren Scheibe Reflektoren angeordnet sind. Die Reflektoren sind hierbei auf der äußeren Oberfläche der Scheibe angeordnet. Diese sind somit unmittelbar äußeren Witterungseinflüssen beziehungsweise mechanischen Einflüssen ausgesetzt.

Der Erfindung liegt daher die Aufgabe zugrunde, ein Rad der gattungsgemäßen Art zu schaffen, bei dem in einfacher und sicherer Weise die Reflektoren angeordnet werden können.

Erfindungsgemäß wird diese Aufgabe dadurch gelöst, daß die Scheibe Aussparungen aufweist, in denen Reflektoren anordenbar sind. Durch diese gefundene Lösung ist es vorteilhaft möglich, die Reflektoren sicher in den Aussparungen der Scheibe anzuordnen, wo sie weitgehend vor äußeren Einflüssen, beispielsweise Steinschlag oder ähnlichem, geschützt sind.

In vorteilhafter Ausgestaltung der Erfindung ist vorgesehen, daß die Aussparungen jede beliebige geometrische Form aufweisen können und je nach Bedarf über den gesamten Umfang der kreisringförmigen Scheibe angeordnet sein können. Hiermit wird es vorteilhaft möglich, die Gestaltung der Reflektoren von der Anordnung der Speichen des Rades unabhängig zu machen, so daß jede beliebige geometrische Gestalt denkbar ist. Eine Einschränkung besteht lediglich hinsichtlich der maximalen Breite des Kreisringes und dem Verbleiben von genügend großen Haltestegen zur Gewährleistung einer Stabilität des Kreisringes.

In weiterer bevorzugter Ausgestaltung der Erfindung ist vorgesehen, daß die Reflektoren beabstandet zueinander angeordnet sind, so daß zwischen ihnen relativ großflächige Bereiche verbleiben, die einerseits zum Anbringen von Verzierungen oder als Werbeträger dienen können. Diese Flächen können beispielsweise wählbar mit verzierenden Durchbrüchen und/oder Aufdrucken versehen sein, wobei hier nebensächlich ist, ob die Aufdrucke beispielsweise durch Siebdruck oder durch Aufkleben entsprechender Schmuckelemente erfolgen. Die Anbringung von Werbung kann ebenfalls in geeigneter Weise, beispielsweise durch Aufdruck oder Anbringen entsprechender Werbemittel, beispielsweise Aufkleber oder ähnlichem erfolgen.

Weitere vorteilhafte Ausgestaltungen der Erfindung ergeben sich aus den übrigen in den Unteransprüchen genannten Merkmalen.

Die Erfindung wird nachfolgend in einem Ausführungsbeispiel anhand der zugehörigen Zeichnungen näher erläutert. Es zeigen:
- Figur 1: schematisch eine Seitenansicht eines Rades und
- Figur 2: schematisch einen Längsschnitt durch ein Rad.

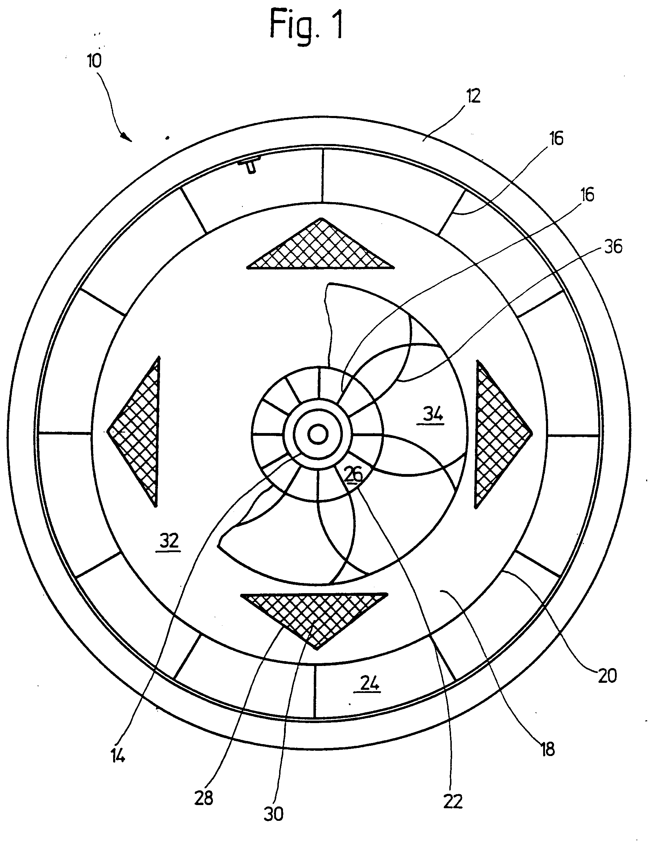

In der Figur 1 ist schematisch ein allgemein mit 10 bezeichnetes Rad dargestellt. Das Rad 10 besitzt eine Felge 12, eine Nabe 14 sowie hier angedeutete, die Nabe 14 mit der Felge 12 verbindende Speichen 16. Zwischen Felge 12 und Nabe 14 ist eine kreisringförmige Scheibe 18 angeordnet, deren Außenumfang 20 einen kleineren Durchmesser als die Felge 12 besitzt und deren Innenumfang 22 einen größeren Durchmesser als die Nabe 14 besitzt. Hierdurch verbleibt zwischen der Scheibe 18 und der Felge 12 ein Freiraum 24 und zwischen der Nabe 14 und der Scheibe 18 ein Freiraum 26.

Die Scheibe 18 besitzt über den Umfang verteilt Aussparungen 28, von denen im gezeigten Beispiel insgesamt vier vorgesehen sind. Die Aussparungen 28 können dabei beispielsweise als Durchbrüche ausgebildet sein. In einer anderen Ausführungsvariante können die Aussparungen 28 lediglich als Vertiefungen innerhalb der Scheibe 18 ausgebildet sein, das heißt, diese sind nicht durchgehend und besitzen eine an der den Speichen 16 zugewandten Seite der Scheibe 18 verlaufende Rückwand. In den Aussparungen 28 sind Reflektoren 30 angeordnet. Die Reflektoren 30 können beispielsweise in den Aussparungen 28 eingeklebt, eingerastet oder auf andere geeignete Weise befestigt sein. Im gezeigten Beispiel sind die Reflektoren 30 dreieckförmig. Diese können jedoch jede beliebige Gestalt annehmen. So ist beispielsweise bei Kinderfahrrädern eine figurhafte Ausgestaltung möglich.

Zwischen den Reflektoren 30 bildet die Scheibe 18 Flächen 32 aus. Die Flächen 32 sind im Verhältnis zu den Reflektoren 30 relativ großflächig und zur Anbringung von Werbeaufdrucken und/oder Werbemitteln, beispielsweise Aufklebern, geeignet. Die Scheibe 18 kann weiterhin, wie hier teilweise angedeutet, beispielsweise an ihrem an den Innenumfang 22 anschließenden Kreisbereich 34 Verzierungen 36 aufweisen. Die Verzierungen 36 sind hier lediglich beispielhaft angedeutet und können selbstverständlich jede beliebige geometrische Gestalt aufweisen. Die Verzierungen 36 können beispielsweise aus aufgebrachten farbigen Streifen, Muster und ähnlichem bestehen. Weiterhin können die Verzierungen 36 auch durch ein Muster ergebende Durchbrüche der Scheibe 18 gebildet sein.

Insgesamt ist also mit der Scheibe 18 ein Teil geschaffen, das durch die Aufnahmemöglichkeiten für Reflektoren zur Verkehrssicherheit eines mit der Scheibe 18 ausgerüsteten Rades dient. Die Reflektoren 30 sind dabei in den Aussparungen 28 sicher und geschützt angeordnet, so daß deren Beschädigung, beispielsweise durch Steinschlag oder ähnlichem, weitgehend ausgeschlossen ist. Weiterhin wird dadurch, daß der Durchmesser des Innenumfangs 22 größer als der Durchmeser der Nabe ist und der Außenumfang 20 kleiner als der Durchmesser der Felge 12 ist, sehr vorteilhaft erreicht, daß durch die so entstehenden Freiräume 24 und 26 eine Seitenwindanfälligkeit des Rades 10 vermieden wird. Bei dem in Figur 1 dargestellten Rad 10 sind selbstverständlich keine bestimmten Größenverhältnisse beachtet. So kann das Rad 10 jede beliebige Größe beispielsweise zwischen 10 Zoll und 28 Zoll aufweisen. Die Durchmesser des Innenumfangs 22 beziehungsweise des Außenumfangs 20 der Scheibe 18 sind den Größenverhältnissen des Rades 10 entsprechend angepaßt.

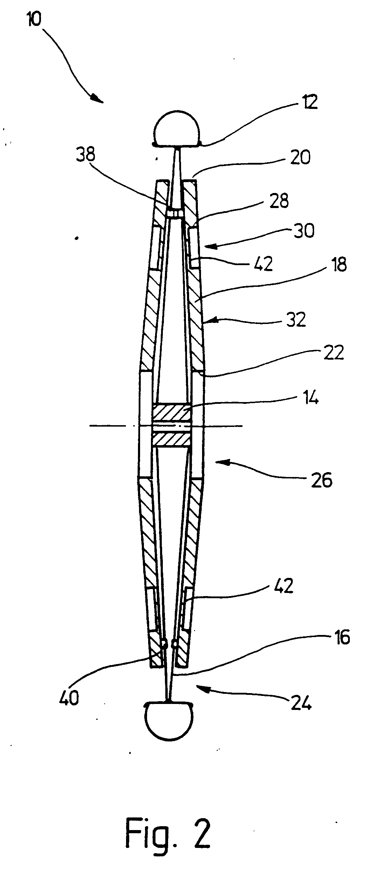

In der Figur 2 ist in einer schematischen Schnittdarstellung die Anordnung der Scheibe 18 verdeutlicht. Gleiche Teile wie in Figur 1 sind mit gleichen Bezugszeichen versehen und hier nicht nochmals erläutert.

Anhand der Figur 2 wird deutlich, daß beidseitig des Rades 10 jeweils eine Scheibe 18 angeordnet sein kann. Die Scheiben 18 können hierbei identisch aufgebaut und jeweils seitenverkehrt an dem Rad 10 befestigt sein. Selbstverständlich ist es jedoch auch möglich, auf den beiden Seiten des Rades 10 jeweils unterschiedlich aufgebaute Scheiben 18 anzuordnen. In der Schnittdarstellung wird deutlich, daß die Aussparungen 28 zur Aufnahme der Reflektoren 30 als Vertiefungen 42 ausgebildet sein können, in denen die in Figur 2 aus Gründen der Übersichtlichkeit nicht dargestelten Reflektoren 30 sicher und geschützt angeordnet werden können. Hierzu können entsprechende Rastmittel, beispielsweise Rastbuckel, vorgesehen sein, die eine sichere Arretierung der Reflektoren gewährleisten.

Die Scheiben 18 können auf unterschiedliche Weise an dem Rad 10 befestigt sein. In der Figur 2 ist oberhalb der Nabe 14 angedeutet, daß die Scheiben 18 über Verbindungsmittel 38 direkt miteinander verbunden sind. Die Verbindungsmittel 38 können beispielsweise Rastmittel sein, die quasi ein Zusammenschnappen der beiden Scheiben 18 gewährleisten, wobei diese die Scheiben 18 auf Zug beanspruchen, so daß diese gegen die Speichen 16 gedrückt werden und dadurch in ihrer Lage verbleiben. In der Figur 2 ist als weitere Befestigungsmöglichkeit unterhalb der Nabe 14 angedeutet, daß die Scheiben 18 Rastmittel 40 aufweisen können, mit Hilfe derer die Scheiben 18 auf den Speichen 16 aufrastbar sind. Denkbar ist auch eine Kombination der Verbindungsmittel 38 mit den Rastmitteln 40, so daß über die Rastmittel 40 eine lageorientierte Befestigung der Scheiben 18 an dem Rad 10 vorgenommen werden kann, während die Verbindungsmittel 38 eine Sicherung gegen ein ungewolltes Lösen der Scheiben 18 bilden. Die Verbindungsmittel 38 greifen dabei durch die von den Speichen 16 gebildeten Zwischenräume durch.

In den Figuren 1 und 2 ist die Erfindung beispielhaft an einem Vorderrad eines Fahrrades verdeutlicht. Selbstverständlich kann jedes beliebige Rad gemäß Anspruch 1 mit der Scheibe versehen sein. Neben Rädern von Fahrrädern, Mopeds und Motorrädern, wobei auch deren Antriebsräder bei entsprechender Beachtung des notwendigen Freiraums für die Antriebsmittel mit der Scheibe versehen sein können, ist deren Anbringung auch an Rädern von Personenkraftwagen, Lastkraftwagen oder ähnlichem möglich. Insbesondere durch die in den Scheiben angeordneten Reflektoren kann eine Erkennbarkeit der Fahrzeuge, insbesondere bei Dunkelheit, erreicht werden. So sind beispielsweise bei einer Annäherung an eine Kreuzung anhand der von der Seite sichtbaren Reflektoren für andere Verkehrsteilnehmer Rückschlüsse auf eine Geschwindigkeit beziehungsweise eine Änderung der Geschwindigkeit, das heißt sowohl ein Beschleunigen oder Abbremsen des Fahrzeuges beziehungsweise dessen Stillstand erkennbar. Insgesamt wird somit die Verkehrssicherheit der mit den Scheiben ausgerüsteten Fahrzeuge deutlich verbessert. Gerade bei auf kreuzenden Fahrspuren sich bewegenden Fahrzeugen ist ein rechtzeitiges Erkennen der Verhaltensweise des jeweils anderen Fahrzeugführers von Vorteil. Durch die rotierenden beziehungsweise im Stillstand sich befindenden Reflektoren wird die Erkennbarkeit des Fahrzeuges wesentlich verbessert.

Insbesondere ist es auch möglich, die Scheibe 18 selber aus einem lumineszierenden Material herzustellen, das beispielsweise Licht einer anderen Wellenlänge abstrahlt als die Reflektoren 30. Die Erkennbarkeit eines mit der Scheibe 18 ausgebildeten Rades wird hierdurch deutlich verbessert.

## Patentansprüche

1. Rad (10) mit einer Felge (12), einer Nabe (14) sowie die Felge (12) mit der Nabe (14) verbindenden Versteifungsmitteln, insbesondere Speichen (16), wobei auf wenigstens einer Seite des Rades (10) eine lösbar mit dem Rad (10) verbindbare Scheibe (18) angeordnet ist, deren Innenumfang (22) einen größeren Durchmesser als die Nabe (14) und deren Außenumfang (20) einen kleineren Durchmesser als die Felge (12) aufweist, **dadurch gekennzeichnet**, daß die Scheibe (18) Aussparungen (28) zur Aufnahme von Reflektoren (30) besitzt.

2. Rad nach Anspruch 1, **dadurch gekennzeichnet**, daß die Scheibe (18) auf ihrer den Speichen (16) zugewandten Seite Rastmittel (40) aufweist, die entsprechend der Speichenteilung angeordnet sind und die auf die Speichen (16) aufrastbar sind.

3. Rad nach einem der vorhergehenden Ansprüche, **dadurch gekennzeichnet**, daß die Scheiben (18) beidseitig des Rades (10) angeordnet sind.

4. Rad nach Anspruch 3, **dadurch gekennzeichnet**, daß die Scheiben (18) über Verbindungsmittel (38) lösbar miteinander verbunden sind.

5. Rad nach einem der vorhergehenden Ansprüche, **dadurch gekennzeichnet**, daß die die Reflektoren (30) aufnehmenden Aussparungen (28) durch Vertiefungen (42) in der Scheibe (18) gebildet sind, in die die Reflektoren (30) einbringbar sind.

6. Rad nach Anspruch 5, **dadurch gekennzeichnet**, daß die Reflektoren (30) in die Vertiefungen (42) einrastbar sind.

7. Rad nach einem der vorhergehenden Ansprüche, **dadurch gekennzeichnet**, daß die Scheibe (18) kreisringförmig ist.

8. Rad nach einem der vorhergehenden Ansprüche, **dadurch gekennzeichnet**, daß die Kontur des Innenumfangs (22) und/oder des Außenumfangs (20) einen von einer Kreislinie abweichenden Verlauf aufweist.

9. Rad nach einem der vorhergehenden Ansprüche, **dadurch gekennzeichnet**, daß die Scheibe (18) aus einem lumineszierenden Material besteht.

## Claims

1. A wheel (10) having a rim (12), a hub (14) and stiffening means, in particular spokes (16), which connect the rim (12) to the hub (14), a disc (18) - detachably connectable to the wheel (10) - being arranged on at least one face of the wheel (10) and the disc inner-circumference (22) having a larger diameter than the hub (14) and the disc outer-circumference (20) having a smaller diameter than the rim (12), characterised in that the disc (18) has cut-outs (28) for receiving reflectors (30).

2. A wheel in accordance with Claim 1, characterised in that on its face facing the spokes (16), the disc (18) has locking means (40) which are arranged in accordance with the spoke spacing and which are lockable onto the spokes (16).

3. A wheel in accordance with any one of the preceding Claims, characterised in that the discs (18) are arranged on both faces of the wheel (10).

4. A wheel in accordance with Claim 3, characterised in that the discs (18) are detachably connected to one another via connection means (38).

5. A wheel in accordance with any one of the preceding Claims, characterised in that the cut-outs (28) receiving the reflectors (30) are formed by depressions (42) in the disc (18), into which depressions (42) the reflectors (30) can be placed.

6. A wheel in accordance with Claim 5, characterised in that the reflectors (30) are lockable into the depressions (42).

7. A wheel in accordance with any one of the preceding Claims, characterised in that the disc (18) is circular-ring-shaped.

8. A wheel in accordance with any one of the preceding Claims, characterised in that the contour of the inner circumference (22) and/or of the outer circumference (20) has a course deviating from a circular line.

9. A wheel in accordance with any one of the preceding Claims, characterised in that the disc (18) is composed of a luminescent material.

## Revendications

1. Roue (10) avec une jante (12), un moyeu (14), ainsi qu'avec des moyens de raidissement raccordant la jante (12) au moyeu (14), en particulier des rayons (16), un disque (18) pouvant être raccordé à la roue de manière amovible étant placé sur au moins un côté de la roue (10), le pourtour intérieur (22) du disque présentant un diamètre plus grand que le moyeu (14) et le pourtour extérieur (20) un diamètre plus petit que la jante (12), **caractérisée en ce que** le disque (18) a des évidements (28) pour le logement de réflecteurs (30).

2. Roue selon la revendication 1, **caractérisée en ce que** le disque (18) présente des moyens d'enclenchement (40) sur son côté tourné du côté des rayons (16), ces moyens d'enclenchement étant disposés selon la division des rayons et pouvant s'enclencher sur les rayons (16).

3. Roue selon l'une des revendications précédentes, **caractérisée en ce que** les disques (18) sont disposés des deux côtés de la roue (10).

4. Roue selon la revendication 3, **caracterisée en ce que** les disques (18) sont raccordés entre eux de manière amovible par l'intermédiaire de moyens de raccordement (38).

5. Roue selon l'une des revendications précédentes, **caractérisée en ce que** les évidements (28) logeant les réflecteurs (30) sont formés par des creux (42) dans le disque (18) dans lesquels ces réflecteurs (30) peuvent être placés.

6. Roue selon la revendication 5, **caractérisée en ce que** les réflecteurs (30) peuvent s'enclencher dans les creux (42).

7. Roue selon l'une des revendications précédentes, **caractérisée en ce que** le disque (42) est de forme circulaire.

8. Roue selon l'une des revendications précédentes, **caractérisée en ce que** le contour du pourtour intérieur (22) et/ou du pourtour extérieur (20) présente une allure déviant d'une ligne circulaire.

9. Roue selon l'une des revendications précédentes, **caractérisée en ce que** le disque (18) est constitué d'un matériau luminescent.
